(19) Europäisches Patentamt
European Patent Office
Office européen des brevets

(11) Publication number: 0 176 062
A2

# (12) EUROPEAN PATENT APPLICATION

(21) Application number: 85111984.2

(22) Date of filing: 21.09.85

(51) Int. Cl.[4]: C 08 K 5/54
C 08 K 9/06

(30) Priority: 27.09.84 US 654907

(43) Date of publication of application:
02.04.86 Bulletin 86/14

(84) Designated Contracting States:
DE FR GB

(71) Applicant: DOW CORNING CORPORATION
P.O. Box 1767
Midland Michigan 48640(US)

(72) Inventor: Plueddemann, Edwin Paul
940 E. Pinecroft Lane
Midland Michigan 48640(US)

(74) Representative: Sternagel, Hans-Günther, Dr. et al,
Patentanwälte Dr. M. Hann Dr. H.-G. Sternagel
Marburger Strasse 38
D-6300 Giessen(DE)

## (54) Silane bonding agents for high temperature applications and method therefor.

(57) Silane coupling agents having improved resistance to oxidative and or hydrolytic stress are obtained by mixing an aminoalkyl-substituted hydrolyzable silane and an aryl-substituted hydrolyzable silane. The mixture of silanes is useful for bonding an organic resin to a solid inorganic material and is particularly useful for preparing improved high-temperature composites, such as polyimide/glass fabric laminates.

EP 0 176 062 A2

Croydon Printing Company Ltd.

# SILANE BONDING AGENTS FOR HIGH TEMPERATURE APPLICATIONS AND METHOD THEREFOR

The present invention relates to silane compositions that are useful as coupling agents and primers to improve the adhesion between an organic resin and an inorganic filler or substrate.

Silane coupling agents are well known in the organic resin/inorganic surface art, and particularly in the thermoset resin/fibrous filler art relating to structural composites. Silane coupling agents and primers typically have the formula $ASiB_3$ where A denotes an organic radical which bonds with the organic resin and B denotes a hydrolyzable radical which leads to bonding of the silane silicon atom to the inorganic surface by way of oxane bonds, such as -SiOSi- bonds or -AlOSi- bonds. Improved adhesion of the organic resin to the inorganic surface results from this dual bonding.

Silane coupling agents and primers having the above formula where A denotes an aminoalkyl radical, such as $H_2NCH_2CH_2CH_2-$ or $H_2NCH_2CH_2NHCH_2CH_2CH_2-$, are widely used in epoxy-, phenolic-, melamine-, nylon-, polyvinyl chloride-, acrylic-, polyolefin-, polyurethane-, nitrile rubber- and polyimide-containing compositions. However, for organic resin/inorganic filler compositions that are subjected to vigorous oxidizing and/or hydrolyzing environments the use of silane coupling agents wherein A is based solely on the aminoalkyl radical is less than completely satisfactory.

For example, $H_2NCH_2CH_2CH_2Si(OCH_2CH_3)_3$ provides good initial coupling of a polyimide resin to glass fabric in a composite laminate but loses nearly 75% of its effect when the composite is exposed to a temperature of 315°C for 200 hours in air and a 2 hour exposure to boiling water.

Aryl-substituted silsesquioxanes have been shown to be much more resistant to oxidation than aliphatic-substituted silsesquioxanes, as measured by isothermal weight loss at 300°C. However, the aryl-substituted silane precursors to the silsesquioxanes are no better as coupling agents for polyimide resin/glass fabric composites then amino-alkyl-substituted silanes, and phenyltrimethoxy silane has virtually no coupling action.

It has now been discovered that a mixture of an aminoalkyl-substituted silane and certain aryl-substituted silanes, when used as a coupling agent or primer for an organic resin/inorganic material interface, provides for good initial bonding between organic resin and inorganic material and good retention of that bonding after exposure to oxidizing and/or hydrolyzing conditions.

It is an object of the present invention to provide new silane compositions. It is another object of this invention to provide silane coupling agent compositions for high-temperature organic resins. It is a particular object of this invention to provide silane coupling agent compositions which provides for the retention of wet-strength after thermal stress of a polyimide/glass fiber composite. It is also an object of the present invention to provide a method for treating an inorganic surface to provide for improved bonding of high-temperature organic resins thereto. It is additionally an object of this invention to provide organic resin/glass fiber composites having improved high-temperature stability.

These objects, and others that will become apparent to one skilled in the organosilane coupling agent art upon considering the following disclosure and appended claims, are obtained by the present invention which, briefly stated, comprises mixing an aminoalkyl-substituted silane with a

thermally-stable aryl-substituted silane to improve the coupling action of the latter and the oxidative and/or hydrolytic stability of the former.

It was not expected that the compositions of this invention would provide better wet and dry coupling action than either of its components taken separately, particularly when extremely minor amounts of aminoalkyl-substituted silane were mixed with large amounts of resin-unreactive aryl-substituted silanes.

In one aspect, the present invention relates to a composition consisting essentially of a mixture of (i) from 0.1 to 85 parts by weight of an aminoalkyl-substituted silane having the formula $Z_3SiQNH(CH_2CH_2NH)_aY$ wherein Z denotes a hydrolyzable radical, Y denotes a monovalent radical selected from the group consisting of hydrogen atoms and hydrocarbon radicals, Q denotes an alkylene radical having at least three carbon atoms separating the N and the Si directly bonded thereto, and a has a value of 0 or 1, and (ii) from 99.9 to 15 parts by weight of an aryl-substituted silane having the formula $Z_3SiR$ wherein Z has the meaning stated above and R denotes a radical selected from the group consisting of phenyl, substituted-phenyl, xenyl and substituted-xenyl wherein the substituents of said substituted-phenyl and xenyl are selected from the group consisting of chloro, bromo, carboxyl, cyano, nitro and methyl; the total of the amounts of (i) and (ii) being 100 parts by weight and, optionally, (iii) a solvent component for the mixture of (i) and (ii).

The aminoalkyl-substituted silane component (i) of the compositions of this invention has the formula (1).

$$Z_3SiQNH(CH_2CH_2NH)_aY \qquad (1)$$

In formula (1) each Z denotes, independently, a silicon-bonded hydrolyzable radical, i.e. a radical that is replaced with a silicon-bonded hydroxyl radical when exposed

to water at room temperature. Typically, Z denotes an alkoxy radical such as methoxy or ethoxy; although alkoxyalkoxy radicals, such as methoxyethoxy; acyloxy radicals, such as acetoxy; halogen radicals, such as chlorine; and others such as amine, acetamido and methylethylketoximo are generally expected to be operable. Preferably, Z is an alkoxy radical such as methoxy or ethoxy because the corresponding silanes are readily available and they produce neutral, volatile alcohols when exposed to water.

In formula (1), Y denotes H or a monovalent hydrocarbon radical such an alkyl radical, such as methyl or ethyl; an aralkyl radical, such as benzyl or vinylbenzyl; and an alkenyl radical, such as vinyl or allyl. Preferably, Y is a hydrogen atom.

Examples of Q radicals include $-CH_2CH_2CH_2-$, $-CH_2CH(CH_3)CH_2-$, and $-(CH_2)_4$, although alkylene radicals having 5 or more carbon atoms are also contemplated for Q in formula (1). Alkylene radicals having 3 or 4 carbon atoms are typical Q radicals.

Examples of suitable aminoalkyl-substituted silanes that are useful in this invention include, but are not limited to, $(CH_3O)_3SiCH_2CH_2CH_2NH_2$, $(CH_3CH_2O)_3SiCH_2CH_2CH_2NH_2$, $(CH_3O)_3SiCH_2CH_2CH_2NHCH_3$, $(CH_3O)_3SiCH_2CH_2CH_2CH_2NH_2$, $(CH_3O)_3Si(CH_2)_3NHCH_2CH_2NH_2$, $(CH_3O)_3Si(CH_2)_3NHCH_2CH_2NHCH_2C_6H_4CH{=}CH_2 \cdot HCl$, $(CH_3O)_3SiCH_2CH(CH_3)CH_2NHCH_2CH_2NH_2$, $(CH_3CH_2O)_3Si(CH_2)_3NHCH_2CH_2NH_2$, $(CH_3O)_3SiCH_2CH(CH_3)CH_2NH_2$ and $(CH_3CH_2O)_3SiCH_2CH(CH_3)CH_2NH_2$.

Of course, it is to be understood that the aminoalkyl-substituted silanes, as represented by formula (1) and the above-delineated structures and formulae, can alternately be present as an acid salt such as a formic acid

salt, an acetic acid salt or a hydrochloric acid salt, if desired.

A highly preferred aminoalkyl-substituted silane encompassed by formula (1) and being particularly useful as component (i) in the compositions of this invention is $(CH_3O)_3SiCH_2CH_2CH_2NHCH_2CH_2NH$. This silane, when mixed in various ratios with the highly preferred aryl-substituted silane, delineated below, provides an unexpectedly good coupling agent of this invention.

The aryl-substituted silane component (ii) of the compositions of this invention has the formula (2).

$$Z_3SiR \qquad (2)$$

In formula (2) Z has the same general, typical and preferred meanings stated above for component (i) having formula (1). The hydrolyzable radicals of component (ii) can be the same as, or different from, the hydrolyzable radicals of component (i), if desired.

In formula (2) R denotes a phenyl or xenyl radical which may or may not be substituted with one or more substituents. It is preferred that said substituents do not substantially detract from the oxidative stability of the phenyl or xenyl radical, as measured by isothermal weight loss at 300°C in air of the corresponding silsesquioxane. Said substituents thus include chloro, bromo, carboxyl, cyano, nitro and methyl substituents. Examples of substituted phenyl radicals include 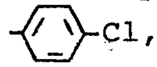, 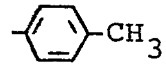, 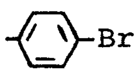, 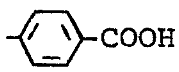 and 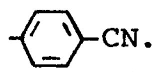. Examples of substituted xenyl radicals include 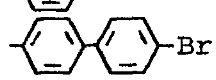 and 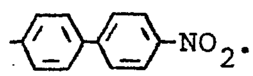. Preferably, R is unsubstituted and most preferably R is the unsubstituted phenyl radical.

Examples of suitable aryl-substituted silanes that are useful in this invention include, but are not limited to, $C_6H_5Si(OCH_3)_3$, $C_6H_5Si(OCH_2CH_3)_3$, $C_6H_5Si(O_2CCH_3)_3$,

$ClC_6H_4Si(OCH_3)_3$, $CH_3C_6H_4Si(OCH_3)_3$, $C_6H_5-C_6H_4Si(OCH_3)_3$, $BrC_6H_4-C_6H_4Si(OCH_3)_3$.

A highly preferred aryl-substituted silane encompassed by formula (2) and being particularly useful as component (ii) in the compositions of this invention is $C_6H_5Si(OCH_3)_3$. As noted above, this silane, when mixed in various ratios with $(CH_3O)_3SiCH_2CH_2CH_2NHCH_2CH_2NH_2$, provides an unexpectedly good coupling agent of this invention.

Aminoalkyl-substituted silanes (i) and aryl-substituted silanes (ii) are well known in the organosilicon art; some are commercially available. Aminoalkyl-substituted silanes are typically prepared by reacting an amine with a chloroalkyl-substituted silane. For example, chloropropyltrimethoxy silane can be reacted with ammonia or ethylene diamine to provide $(CH_3O)_3SiCH_2CH_2CH_2NH_2$ or $(CH_3O)_3SiCH_2CH_2CH_2NHCH_2CH_2NH_2$, respectively. Aryl-substituted silanes are typically prepared by reacting an aryl Grignard reagent with tetrachlorosilane, followed by removal of residual chlorine, if desired, in the well-known manner.

The amounts of components (i) and (ii) that are present in the compositions of this invention can vary greatly, depending upon the intended use of the composition.

Thus, the mixing of as little as 0.1 part by weight of an aminoalkyl-substituted silane (i) with 99.9 parts by weight of an aryl-substituted silane (ii) will significantly improve the initial coupling action of the latter when used in an organic resin/inorganic filler composite. Alternatively, the mixing of as little as about 15 parts by weight of an aryl-substituted silane (ii) with about 85 parts by weight of an aminoalkyl-substituted silane (i) will significantly improve the oxidative and/or hydrolytic

stability of the latter when used in such a composite as a coupling agent in the usual manner.

A preferred composition of this invention, when considered from the viewpoints of cost, effectiveness, manufacturability and general applicability, is a composition consisting essentially of about 10 parts by weight of the aminoalkyl-substituted silane component and about 90 parts by weight of phenyltrimethoxy silane. Such a composition can also contain an optional amount of a solvent component, further delineated below, if desired.

While not limiting the present invention by way of a theory of operation, I imagine that when the compositions of the present invention are applied to an inorganic surface they form a copolymeric siloxane oligomer containing both aminoalkyl radicals and aryl radicals and that this oligomer provides initial adhesion between the inorganic surface, such as a filler or a substrate, and an organic resin, such as a coating on the substrate or a matrix containing the filler. After exposure of the inorganic surface/organic resin interface to high-temperature, such as temperatures used to cure the resins, the siloxane oligomers condense to form an interpenetrating polymer network at the interface. Even if oxidation should remove aminoalkyl radicals from the interface an oxidation-resistant aromatic silicone structure remains as an interpenetrating phase, providing continued adhesion that has oxidation and hydrolysis resistance for the interface, and ultimately the composite structure.

Compositions of the present invention that consist essentially of from 0.2 to 20 parts by weight of $(CH_3O)_3SiCH_2CH_2CH_2NHCH_2CH_2NH_2$ and from 99.8 to 80 parts by weight of $C_6H_5Si(OCH_3)_3$, where the total of both silanes is 100 parts by weight, have been found unexpectedly, to provide greater bonding between an organic coating and a glass

substrate primed therewith than when the substrate is primed with either silane, used separately. Furthermore, especially good resistance to boiling water is demonstrated by such a coated substrate when the substrate has been primed by a composition of this invention consisting essentially of from about 1 to 10 parts by weight of said aminoalkyl-substituted silane for every 100 parts by weight of said both silanes.

The compositions of the present invention can optionally further comprise a solvent component (iii) for the mixture of aminoalkyl-substituted silane (i) and aryl-substituted silane (ii). Typical organic solvents (iii) include alcohols, such as methanol, ethanol and isopropanol; hydrocarbons, such as cyclohexane, toluene and petroleum ether; halogenated hydrocarbons, such as methylene chloride; ethers, such as tetrahydrofuran, and ethylene glycol ethers; and ketones, such as acetone and methylisobutyl ketone. Alcohols such as methanol and isopropanol are preferred organic solvents. The solvent component (iii) can comprise a single solvent or a mixture of solvents, as desired.

The solvent component (iii) can further comprise water, either alone or in combination with one or more organic solvents. When water is present in the compositions of this invention the silane components, hereinabove delineated, are rapidly hydrolyzed to silanols and, in the absence of a stabilizing agent such as an acid, will condense to higher molecular weight materials and precipitate a siloxane oligomer from solution. To inhibit said precipitation, the pH of the water-containing compositions of this invention should be maintained on the acid side and preferably below a value of about 3. An acidic pH can be maintained in the usual manner with an acid such as formic acid, acetic acid, hydrochloric acid or phosphoric acid. Preferably, the water-containing compositions will be

utilized shortly, for example, within 8 hours, after they have been prepared to minimize said condensation and avoid said precipitation.

The compositions of this invention can be readily prepared by mixing appropriate amounts of the desired silane components (i) and (ii), either with or without solvent component (iii). Compositions of this invention that are to be used as a substrate primer are typically prepared by dissolving at least 10 parts by weight of the mixture of silane components in 100 parts by weight of a suitable organic solvent. Sizing solutions for fibrous fillers are typically prepared by dissolving from 0.1 to 0.5 parts by weight of the mixture of silane components in 100 parts by weight of acidified water.

The compositions of the present invention are particularly useful as silane coupling agents for inorganic filler/organic resin matrix composites and as primers for inorganic substrates to be coated with organic resin coatings.

Accordingly, the present invention relates, in a second aspect, to an improved method of bonding an organic resin to a solid inorganic material, said method comprising applying to the surface of the solid inorganic material an amount of a silane composition sufficient to increase the wet bond strength of the organic resin to the solid inorganic material and bringing the organic resin and the solid inorganic material into bonding contact, the improvement comprising applying to the solid inorganic material as the silane composition, the compositions of this invention.

In the improved method of the present invention, an inorganic material is treated at its surface with the silane compositions of this invention delineated above and

exemplified below and, subsequently or simultaneously, is brought into bonding contact with an organic resin.

Water is needed sometime in the method of this invention in sufficient amount to hydrolyze any hydrolyzable radicals that are present in the silane composition, thereby initiating the bonding process between the solid inorganic material and the silane composition. Sufficient water is usually adventitiously present in various amounts on the surface of the inorganic material, in the atmosphere or in the organic resin. Also, by way of preparing the compositions of this invention, sufficient water can be used in the silane composition. Water can also be added to the inorganic material and/or the organic resin, if desired.

The silane composition can be applied to the surface of the solid inorganic material in the usual ways. For example, the silane composition can be applied directly to the solid inorganic material and the organic resin subsequently brought into bonding contact with the thus-treated surface. Preferably, the applied silane composition is at least partially hydrolyzed before the organic resin is brought into bonding contact therewith. In this direct-application method the silane composition can be applied neat or as a solution thereof. In the addition-application method, wherein the silane composition is thoroughly mixed with the organic resin before it is brought into bonding contact with the solid inorganic material, the silane composition is typically added neat. This additive-application method is also useful in the improved method of this invention.

In the improved method of this invention, the amount of silane composition that is applied to the solid inorganic surface is merely that amount that will increase the wet bond strength of the organic resin to the

thus-treated solid inorganic material, compared to the wet bond strength obtained with the untreated solid inorganic surface. Measurement of wet bond strength is described below in connection with the examples of this invention.

Surprisingly, the amount of silane composition that is used in the improved method of this invention is no greater than the amount of silane composition that is used in the old method, even though the method of this invention uses a silane composition that contains much less organic resin-reactive, i.e., aminoalkyl-substituted silane than the silane compositions that are used in the old method.

Thus, for sizing an inorganic filler such as fiberglass or a mineral powder, a suitable amount of a silane composition of this invention to use can be from about 0.1 to 1.0, preferably from 0.2 to about 0.5, percent by weight, based on the weight of the inorganic filler. For priming an inorganic substrate, such as an aluminum surface or a siliceous surface, sufficient silane composition is used to provide a thin layer, such as from 0.1 to 10 micrometers in depth, of hydrolyzed silanes thereon.

In the improved method of this invention, the solid inorganic substrate and the organic resin are brought into bonding contact in the presence of a suitable amount of the silane composition of this invention. As noted above, said bonding contact can be done at the same time that the silane composition is applied to the inorganic material, such as when the silane composition is mixed with the organic resin and the resulting mixture then bonded to the inorganic material. Alternatively, said bonding contact can be done subsequent to applying the silane composition to the inorganic substrate, such as when fiberglass is sized, with a sizing composition comprising a silane composition of this

invention, for subsequent incorporation into an organic resin as a reinforcing material.

By bonding contact, it is meant herein any process that provides an intimate contact between organic resin and solid inorganic material and results in an adhesion therebetween. Intimate contact is typically achieved between a solid inorganic material and a liquid form of the organic resin, such as a melted form or a dissolved form of the organic resin.

The solid inorganic material that is used in the improved method of this invention can be any of the materials usually used as a filler in, or a substrate for, an organic resin. With respect to composition, said solid inorganic materials typically contain ≡SiOH and/or =AlOH groups and include siliceous materials, such as silica, glass, ceramic, sand, quartz, clays, talcs, micas, wollstonite; a metallic or metallic oxide material, such as alumina and aluminum; and masonary materials such as mortar, brick, concrete, stone and cinder block. With respect to form, said solid inorganic materials can have any form such as a particulate form, such as powder, grains, aggregate, spheres, flakes, beads, and bubbles; fiber forms such as filaments, rods, strands, roving and whiskers; and sheet form such as cloth, mat, plates, films and screens.

The organic resin that is used in the improved method of this invention can be any of the synthetic polymeric materials, thermoplastic or thermoset, that are usually used as a matrix or a coating material in conjunction with a solid inorganic filler or substrate. In a preferred embodiment, the organic resin contains reactive sites which provide a curing reaction for the organic resin when heated and also a bonding reaction with the silane composition of this invention when heated in contact therewith.

Examples of suitable organic resins for the improved method of this invention include epoxies, styrenics, phenolics, melamines, nylons, polyvinylchloride, acrylics, polyolefins, polyurethanes, polyimides, styrene-butadiene rubber, nitrile rubber, ethylene-propylene rubber, natural rubber and silicones.

The present invention has particular usefulness in the high-temperature thermoset organic resin/fiberglass reinforcement composite art, such as the polyimide/fiberglass and the epoxy/fiberglass laminate art. The compositions and method of this invention provide high-temperature composites which have excellent dry and wet strength, initially and after severe oxidative stress that is commonly experienced during the processing, curing, and using of high-temperature organic resins. By high-temperature, it is meant up to 425°C for brief intervals, such as during processing and curing and up to 325°C for extended intervals, such as during use.

The following examples are disclosed to further illustrate how to practice the present invention and are not intended to limit the present invention which is delineated by the appended claims.

All parts and percentages are by weight unless otherwise noted. Adhesion was measured in units of pounds force per inch and was converted to newtons per meter (N/m) by multiplying by 175.1268. Flexural strength was measured in pounds force per square inch (p.s.i.) and was converted to megapascals (MPa) by multiplying by 6894.757 and dividing by $10^6$.

Wet bond strength refers to the adhesive strength of a glass microscope slide/organic resin laminate or the flexural strength of a heat-cleaned glass fabric/organic resin composite that has been soaked for 2 hours in boiling water.

Example 1

Six primer solutions were prepared by dissolving 25 parts of $H_2NCH_2CH_2NHCH_2CH_2CH_2Si(OCH_3)_3$ or a mixture thereof with $C_6H_5Si(OCH_3)_3$ in 75 parts of isopropanol. Six glass microscope slides were each coated with one of the primer solutions and the coated slides were allowed to dry for 10 minutes at room conditions. The thus-primed glass slides were then coated with a thin layer of a one-component urethane adhesive and cured for 5 days at room temperature.

The coated glass slides were then examined for initial adhesion of the cured urethane adhesive to the glass and again after a 2 hour soak in boiling water and again after a 5 hour soak in boiling water. The results are summarized in Table I. This example illustrates a preferred embodiment of this invention comprising a 10/90 mixture of aminofunctional silane and hydrophobic silane. This example also illustrates the wide range of compositions of this invention that lead to primers that display long-term water resistance.

Table I

| Primer[1] | Adhesion to Glass, N/m[2] Dry | 2 Hour Boil | 5 Hour Boil |
|---|---|---|---|
| 100% A | C.F. | Nil | - |
| 50% A<br>50% B | C.F. | Nil | - |
| 20% A<br>80% B | C.F. | C.F. | 35 |
| 10% A<br>90% B | C.F. | C.F. | C.F. |
| 1% A<br>99% B | C.F. | C.F. | 350 |
| 0.2% A<br>99.8% B | C.F. | C.F. | 228 |

(1) A = $H_2NCH_2CH_2NHCH_2CH_2CH_2Si(OCH_3)_3$

B = $C_6H_5Si(OCH_3)_3$

(2) C.F. = Cohesive Failure of Urethane Adhesive

Example 2

The experiments of Example 1 were repeated with six primer solutions, including four of this invention and two controls. An unprimed sample was also investigated. The resin component that was used, Estane® 5701 (thermoplastic urethane from B.F. Goodrich; Cleveland, OH) was fused onto the sample slides at 175°C. The results are summarized in Table II. This example illustrates the excellent dry and wet strength that the primer compositions of this invention provide for a glass and thermoplastic urethane interface. This example also illustrates the synergistic effect of a mixture of aminoalkyl-substituted silane and aryl-substituted silane on the dry and wet adhesion of thermoplastic urethane to glass.

Table II

| Primer(1) | Adhesion to Glass, N/m(2) Dry | 2 Hour Boil |
|---|---|---|
| 100% A | 385 | Nil |
| 100% B | 123 | Nil |
| 20% A<br>80% B | 578 | Nil |
| 10% A<br>90% B | C.F. | 1856 |
| 1% A<br>99% B | C.F. | 3152 |
| 0.2% A<br>99.8% B | 3082 | 1576 |
| None | Nil | Nil |

(1) A = $H_2NCH_2CH_2NHCH_2CH_2CH_2Si(OCH_3)_3$

B = $C_6H_5Si(OCH_3)_3$

(2) C.F. = Cohesive Failure of Urethane Adhesive

Example 3

Example 2 was repeated except that the primer solution consisted of 10 parts of $H_2NCH_2CH_2NHCH_2CH_2CH_2Si(OCH_3)_3$ and 90 parts of either $CH_3C_6H_4Si(OCH_3)_3$ or $BrC_6H_4Si(OCH_3)_3$ or $Br_2C_6H_3Si(OCH_3)_3$. The dry peel strengths for these three primer compositions were 438, 700 and 1156 N/m, respectively. This example illustrates other aryl-substituted silanes that are operative as the hydrophobic portion of the compositions of this invention.

Example 4

Composite laminates (1/8") were prepared from glass fabric and polyimide resin as follows. Two sizing solutions were prepared by dissolving a small amount of either $H_2NCH_2CH_2CH_2Si(OCH_2CH_3)_3$ or a 10/90 mixture of $H_2NCH_2CH_2NHCH_2CH_2CH_2Si(OCH_3)_3$ and $C_6H_5Si(OCH_3)_3$ in water. In the latter case, the water was acidified to a pH of 3 with formic acid. Style 7781 (construction 57 x 54) glass fabric was sized with one of the sizing solutions and then impregnated with 35 percent, based on total composite weight, of Kerimid® 601 (Rhone-Poulenc; France) and the resulting prepregs were stacked and heated under pressure to form the laminates that were tested. See Table III for results. This example illustrates the increased thermal stability of the silane coupling agents of this invention comprising $C_6H_5Si(OCH_3)_3$ as shown by improved retention of flexural strength and modulus after considerable thermal stress.

Table III

| Test | Silane Coupling Agent (1) | |
|---|---|---|
| | 10% A/90% B | 100 % C |
| Flexural Strength, MPa | | |
| Initial | 543.75 | 475.57 |
| $1000^h$/260°C | 409.31 | 257.74 |
| % Retention | 75 | 54 |
| $2000^h$/260°C | 306.32 | 133.60 |
| % Retention | 56 | 28 |
| Flexural Modulus, GPa | | |
| Initial | 24.131 | 23.718 |
| $1000^h$/260°C | 20.822 | 21.925 |
| % Retention | 86 | 92 |
| $2000^h$/260°C | 20.271 | 17.513 |
| % Retention | 84 | 74 |

(1) A = $H_2NCH_2CH_2NHCH_2CH_2CH_2Si(OCH_3)_3$

B = $C_6H_5Si(OCH_3)_3$

C = $H_2NCH_2CH_2CH_2Si(OCH_2CH_3)_3$

Example 5

Composite laminates were prepared from glass fabric and polyetheresterketone (PEEK) resin. A control laminate was prepared with heat-cleaned glass. A comparison laminate was prepared with glass that had been sized with an aqueous solution $H_2NCH_2CH_2NHCH_2CH_2CH_2Si(OCH_3)_3$. A laminate of this invention was prepared with glass that had been sized with the formic acid-acidified silane coupling agent that is noted in Example 4. The flexural strength of these laminates were measured and were found to be 364.7, 591.7 and 697.1 megapascals for the control, the comparison and the laminate of this invention, respectively.

Example 6

A composite laminate, suitable for use as a printed circuit board, was prepared from style 7628 glass fabric and a standard epoxy resin. The glass fabric was sized with the formic acid-acidified silane coupling agent that is described in Example 4, air-dried and impregnated with about 40 percent by weight of CS-230 epoxy resin (Clark-Schwebel FiberGlass Corp.; Anderson, SC). An assembly of nine plies of the resulting prepreg was laid up and press-cured to a thickness of 62 mils and the resulting laminate was evaluated for water absorption and electrical properties. The water absorption after 24 hours in boiling water was 1.055%. Dielectric constant and dissipation factor at 1 megahertz after 2 hours in boiling water was 4.82 and 0.021 respectively. Dielectric breakdown under all test conditions exceeded 70 kilovolts.

Example 7

Glass microscope slides were primed with 10% solutions of $H_2NCH_2CH_2NHCH_2CH_2CH_2Si(OCH_3)_3$, and various mixtures thereof with $C_6H_5Si(OCH_3)_3$, in methanol, the primed slides were air-dried and then coated with Pyralin® 2555, a polyimide resin from DuPont (Wilmington, DC). The coated

slides were cured for 1 hour at 200°C in air and then boiled in water for 4 hours. The wet adhesion of the polyimide resin film to glass was rated as poor, poor, fair and good, respectively, for primers having 0%, 10%, 50%, and 90% $C_6H_5Si(OCH_3)_3$, based on the weight of both silanes, admixed with the $H_2NCH_2CH_2NHCH_2CH_2CH_2Si(OCH_3)_3$. The polyimide resin had substantially no wet adhesion to unprimed glass.

Example 8

Glass microscope slides were primed with 10% solutions of $CH_2{=}CHC_6H_4CH_2NHCH_2CH_2NHCH_2CH_2CH_2Si(OCH_3)_3 \cdot HCl$, and various mixtures thereof with $C_6H_5Si(OCH_3)_3$ in methanol, the primed slides were air-dried and then coated with Thermid Lacquer LR-600, a polyimide resin from Gulf Oil Chemicals Co.; Overland Park, KS. The coated slides were cured for 1 hour at 100°C and 1 hour at 300°C in air and then boiled in water. The wet adhesion of the polyimide resin film to glass was rated as fair, good and excellent, respectively, for primers having 0%, 17% and 50% $C_6H_5Si(OCH_3)_3$, based on the weight of both silanes admixed with the $CH_2{=}CHC_6H_4CH_2NHCH_2CH_2NHCH_2CH_2CH_2Si(OCH_3)_3 \cdot HCl$. The polyimide resin had substantially no wet adhesion to unprimed glass.

Claims:

1. A composition consisting essentially of a mixture of

(i) from 0.1 to 85 parts by weight of an aminoalkyl-substituted silane have the formula $Z_3SiQNH(CH_2CH_2NH)_aY$ wherein Z denotes a hydrolyzable radical, Y denotes a monovalent radical selected from the group consisting of hydrogen atoms and hydrocarbon radicals, Q denotes an alkylene radical having at least three carbon atoms separating the N and the Si directly bonded thereto and a has a value of 0 or 1, and

(ii) from 99.9 to 15 parts by weight of an aryl-substituted silane having the formula $Z_3SiR$ wherein Z has the meaning stated above and R denotes a radical selected from the group consisting of phenyl, substituted-phenyl, xenyl and substituted-xenyl wherein the substituents of said substituted-phenyl and -xenyl are selected from the group consisting of chloro, bromo, carboxyl, cyano, nitro and methyl; the total of the amounts of (i) and (ii) being 100 parts by weight and, optionally,

(iii) a solvent component for the mixture of (i) and (ii).

2. A composition according to claim 1 wherein the aryl-substituted silane has the formula $C_6H_5Si(OCH_3)_3$.

3. A composition according to claim 2 wherein the aminoalkyl-substituted silane has the formula $H_2NCH_2CH_2NHCH_2CH_2CH_2Si(OCH_3)_3$.

4. A composition according to claim 3 wherein component (i) is present in an amount equal to from 0.2 to 20 parts by weight.

5. A composition according to claim 3 wherein component (i) is present in an amount equal to about 10 parts by weight.

6. A composition according to claim 2 wherein the aminoalkyl-substituted silane has the formula $CH_2=CHC_6H_4CH_2NHCH_2CH_2NHCH_2CH_2CH_2Si(OCH_3)_3 \cdot HCl$.

7. A composition according to claim 6 wherein component (i) is present in an amount equal to about 10 parts by weight.

8. A composition according to claim 2 wherein the aminoalkyl-substituted silane has the formula $H_2NCH_2CH_2CH_2Si(OCH_2CH_3)_3$.

9. A composition according to claim 8 wherein component (i) is present in an amount equal to about 10 parts by weight.

10. In a method for bonding an organic resin to a solid inorganic material, said method comprising applying to the surface of the solid inorganic material an amount of a

silane composition sufficient to increase the wet bond strength of the organic resin to the solid inorganic material and bringing the organic resin and the solid inorganic material into bonding contact, the improvement comprising applying to the solid inorganic material, as the silane composition, the composition of claim 1.